# EUROPEAN PATENT SPECIFICATION

(11) **EP 2 386 769 B1**
(45) Date of publication and mention of the grant of the patent: **09.05.2012**
(21) Application number: 10162875.8
(22) Date of filing: 14.05.2010
(51) Int. Cl.: F16B 25/00

(54) **A screw with low drilling resistance**
Schraube mit geringem Bohrwiderstand
Vis avec faible résistance au perçage

(43) Date of publication of application: 16.11.2011
(73) Proprietor: Taiwan Shan Yin Int'l Co., Ltd., Kaohsiung City 806 (TW)
(72) Inventor: Su, Guo-Cai, Kaohsiung City 806 (TW)
(74) Representative: Chaillot, Geneviève

(56) References cited:
- DE-A1- 4 206 440
- US-A- 3 426 642
- US-A- 4 637 767

## Description

### BACKGROUND OF THE INVENTION

### 1. Field of the Invention

The present invention relates to a screw design, particularly to a screw with low drilling resistance for speeding up the drilling performance and enhancing the drilling force.

### 2. Description of the Related Art

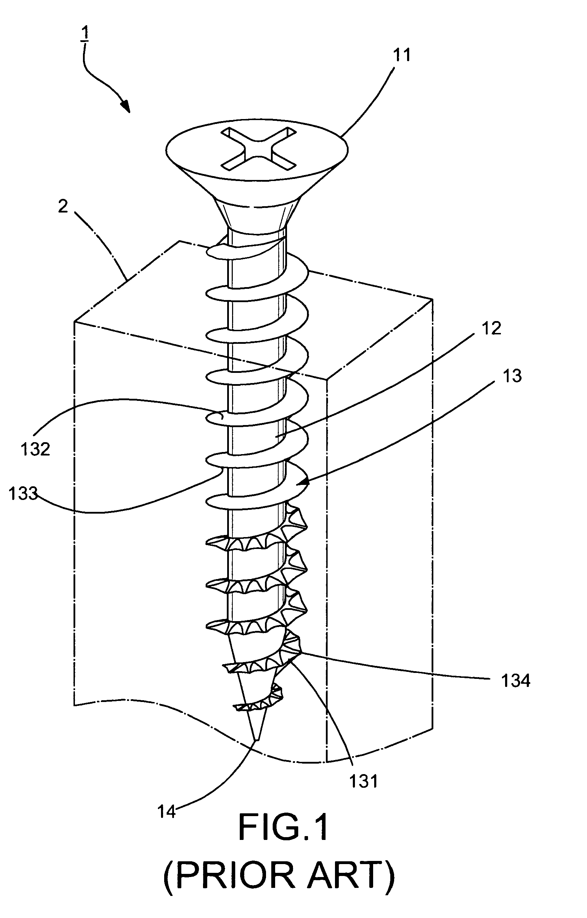

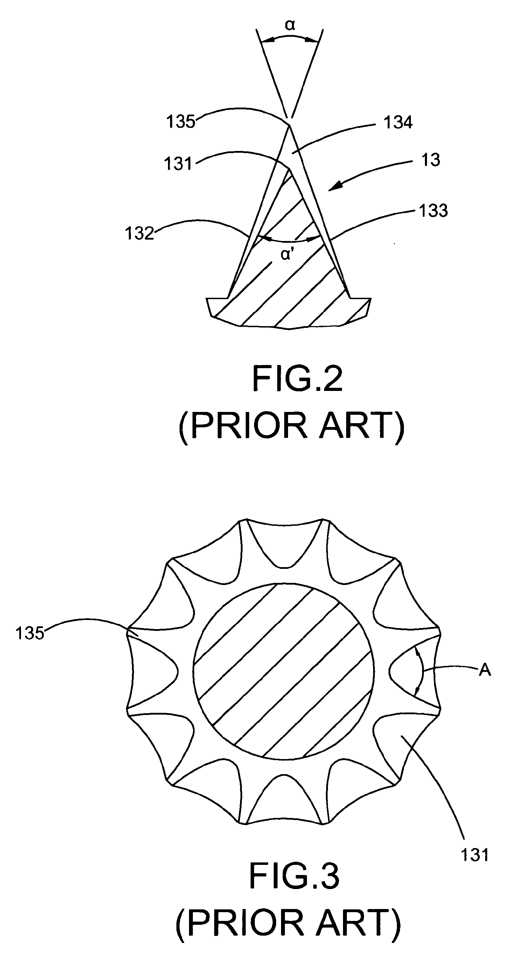

Referring to Figs. **1** to **3****,** a "Thread-Forming Screw Fastener" **1** disclosed in the US Publication No. 2005/0186048 comprises a head portion **11,** a shank portion **12** extended from the head **11,** a plurality of threads **13** spiraling on the shank **12,** and a drilling portion **14** disposed on the shank **12,** opposite to the head **11.** Wherein, a plurality of wave troughs **131** are defined on the threads **13.** Especially, a first apex angle α included by an upper flank **132** and a lower flank **133** of the threads **13** is formed between 30°-35°, and a second apex angle α' included by wave crest **135** formed on the outer thread edge **134** of the deepest region of the wave troughs **131** is contoured between 30°∼58°. Further, a trough angle **A** is included by the wave trough **131.** Accordingly, the screw **1** utilizes the concurrent drilling and cutting efficiency provided by the wave troughs **131** to reinforce the severing performance of the threads **13,** thence achieving a speedy drilling and fastening effect.

However, in time of the threads **13** practically drilling into an object **2,** the dimension of the trough angle **A** of the wave troughs **131** as well as the dimension of the first apex angle α of the threads **13** readily influences fastening effect of the screw **1** though the wave troughs **131** offer a preferable cutting function. The analysis is as follows:

### 1. The dimension of the trough angle A influences the fastening effect:

The dimension of the trough angle **A** decides the cutting function of the threads **131.** That is, if the trough angle **A** is formed by an improperly small size, each wave trough **131** could not be guaranteed to provide the auxiliary cutting with efficiency during the threads **13** drilling into the object **2.** Because the elasticity is characterized by the fibers contained in the object **2,** the fibers are not able to respectively get into the small-sized wave troughs **131.** Therefore, the cutting efficiency of the wave troughs **131** is limited or even the drilling of the threads **13** is in vain; thereby the screw **1** is incapable of being well-drilled into the object **2.** On the other hand, if the trough angle **A** is formed by an improperly large size, the dimension of the threads **13** is likely to be relatively diminished. Herein, such drilling and cutting efficiency of the larger trough angle **A** is not as satisfied as that of the smaller trough angle **A.** Moreover, the smaller threads **13** having a weaker and thinner formation that adversely results in an insufficient bearing force readily collapse.

### 2. The first apex angle α of the threads 13 influences the fastening effect :

The first apex angle α decides the fastening effect of the screw **1.** That is, if the first apex angle α is formed by an improperly small size, the threads **13** are unable to bear a large drilling torque while they confront a more rigid object, which readily breaks the threads **13.** On the other hand, if the first apex angle α is formed by an improperly large size, the threads **13** merely bears a larger drilling torque but provides the cutting effect inferior to that of one with a smaller first apex angle. Thus, the utilization is adversely limited, which indeed needs amendment.

US 3,426,642 (A) discloses a self-tapping screw comprising a head, a shank extended from said head, a thread spiraling on said shank, and a drilling portion disposed on said shank, opposite to said head, wherein a plurality of spaced apart thread-forming projections or protuberances are arranged in the helical path of said thread.

### SUMMARY OF THE INVENTION

It is therefore the purpose .of this invention to provide a screw with low drilling efficiency so as to enhance the cutting efficiency as well as reinforce the drilling competence, thereby achieving a speedy fastening effect.

The screw with low drilling resistance in accordance with the present invention as defined by claim 1 comprises a head portion, a shank portion extended from the head, a plurality of first threads spiraling on the shank portion, and a drilling portion disposed on the shank, opposite to the head. Wherein, each first thread includes a first upper flank and a first lower flank connected to the first upper flank; a first included angle is converged by the first upper flank and the first lower flank. Characterized in that, a plurality of second threads are spiraled on the shank and are respectively disposed on the first upper flank and the first lower flank. Wherein, each second thread includes a second upper flank and a second lower flank connected to the second upper flank; a second included angle is converged by the second upper flank and the second lower flank. Concurrently, a plurality of opening slots are correspondingly defined on the second upper flank and the second lower flank. Further, the first included angle is smaller than the second included angle. Thereby, a favorably severing effect and accommodating manner could be provided. In addition to the disposition of the first threads between the second threads contributing to the reinforcement on the strength of the second threads whose second included angle is larger, the present invention achieves a low drilling resistance to speed up the fastening operation.

Preferably, a diameter of the first threads is smaller than a diameter of the second threads.

Preferably, a diameter of the first threads is equal to a diameter of the second threads.

The advantages of the present invention over the known prior art will become more apparent to those of ordinary skilled in the art upon reading the following descriptions in conjunction with the accompanying drawings.

### BRIEF DESCRIPTION OF THE DRAWINGS

Fig. **1** is a schematic view showing a conventional screw;
Fig. **2** is a cross-sectional view showing a thread of the conventional screw;
Fig. **3** is a cross-sectional view showing the conventional screw;
Fig. **4** is a perspective view showing the first preferred embodiment of the present invention;
Fig. **5** is a partial enlarging view showing Fig. 4;
Fig. **6** is a cross-sectional view showing a thread of the first preferred embodiment;
Fig. **7** is a schematic view showing the first preferred embodiment;
Fig. **8** is a schematic view showing a second preferred embodiment;
Fig. **9** is a schematic view showing the second preferred embodiment;
Fig. **10** is perspective view showing a third preferred embodiment; and
Fig. **11** is a partial enlarging view showing Fig. 10.

### DETAILED DESCRIPTION OF THE PREFERRED EMBODIMENTS

Wherever possible, the same reference numbers are used in the drawings and the description to refer to the same or like parts.

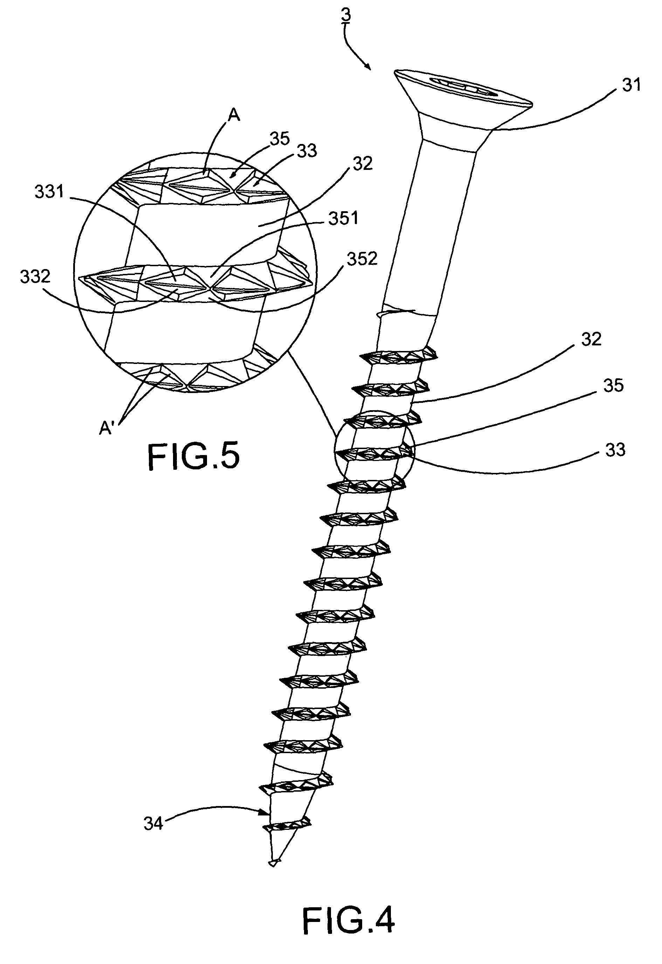

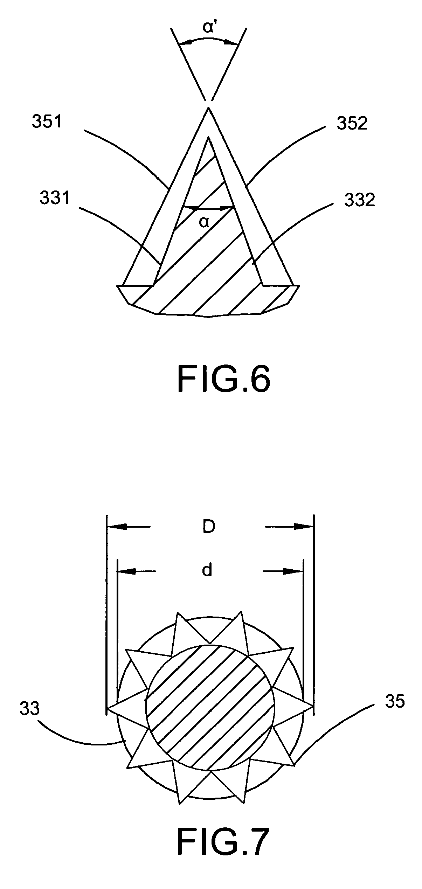

Referring to Figs. **4** to **7****,** a first preferred embodiment of the present invention is shown. A screw **3** with low drilling resistance substantially comprises a head portion **31,** a shank portion **32** extended from the head portion **31,** a plurality of first threads **33** spiraling on the shank portion **32,** and a drilling portion **34** disposed on the shank portion **32,** opposite to the head portion **31.** Wherein, each first thread **33** includes a first upper flank **331,** and a first lower flank **332** connected to the first upper flank **331;** a first included angle α is disposed at a convergence of the first upper flank **331** and the first lower flank **332.** Characterized in that, a plurality of second threads **35** spiraling on the shank portion **32** is respectively disposed on the first upper flank **331** and the first lower flank **332.** Wherein, each second thread **35** includes a second upper flank **351** and a second lower flank **352** connected to the second upper flank **351;** a second included angle α' is defined at a convergence of the second upper flank **351** and the second lower flank **352.** Concurrently, a plurality of opening slots **A** is correspondingly disposed on the second upper flank **351** and the second lower flank **352.** Moreover, the first included angle α is smaller than the second included angle α'. In addition, in this embodiment, a diameter **d** of the first threads **33** is smaller than a diameter **D** of the second threads **35** (as shown in Figs. **6** and **7**), and the opening slot **A** is formed by at least two convergent linear flanks **A'.**

In operation, a screwing torque is imparted on the head portion **31** for bringing the drilling portion **34** to screw into the object (not shown). Thereby, the second threads **35** provide a severing function, and the opening slots **A** defined on the second threads **35** offer a drilling effect as well as a debris accommodating room for receiving the severed debris. Further, due to that the first threads **33** are disposed between the second threads **35**, and the first included angle α is smaller than the second included angle α', the driving strength of the second threads **35** are hence reinforced by the firm support provided by the first threads **33,** so that the drilling and cutting efficiency of the screw **3** could be preferably encouraged. Therefore, the screw of the present invention promotes the cutting efficiency for achieving a speedy fastening.

Herein, the combination of the first threads **33** and the second threads **35** provides the threads with a promoted strength, thereby enhancing the cutting efficiency. Thus, during the drilling of the screw **3,** the dimension of the opening slots **A** does not readily influence the cutting performance. Moreover, since the diameter **d** of the first threads **33** is smaller than the diameter **D** of the second threads **35,** a preferable debris accommodating room could be provided for receiving the severed debris and speedily removing the redundant debris therefrom. As a result, an aim of achieving a swift screwing is accomplished.

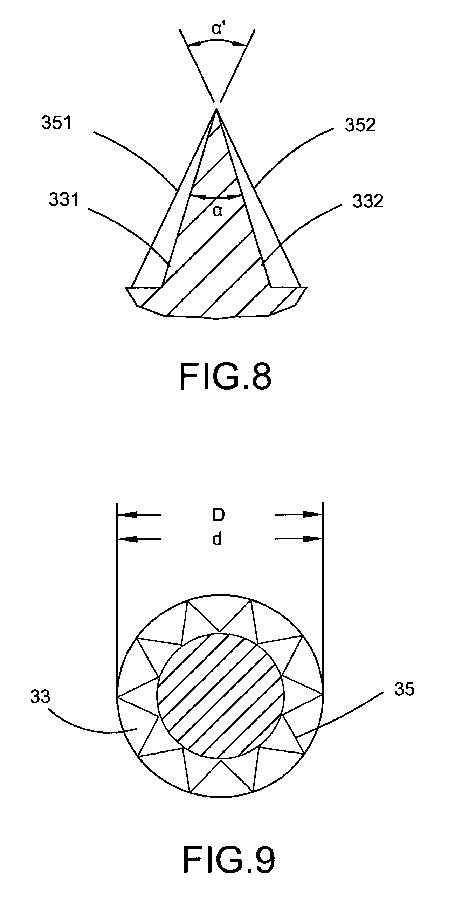

Referring to Figs. **4**, **5**, and **8**, **9**, a second preferred embodiment is shown. The screw **3** with low drilling resistance substantially comprising the similar elements and correlations as those in the first preferred embodiment is herein omitted. A head portion **31**, a shank portion **32**, a plurality of first threads **33**, a drilling portion **34**, and a plurality of second threads **35** could be likely found in this embodiment. These constituents in this embodiment similarly promote the strength of the screw, enhance the cutting effect of the screw, and encourage the fastening speed of the screw as those in the first embodiment. Differently, in this embodiment, the diameter **d** of the first threads **33** is equal to the diameter **D** of the second threads **35**. Accordingly, in operation, by means of the cooperation of the first threads **33** including the smaller first included angle α and the second threads **35** including the larger second included angle α', the screw **3** of the present invention is allowed to bear a larger drilling force, thereby concurrently increasing the screwing strength thereof. Moreover, since the opening slots **A** maintain a certain size of debris accommodating room to receive the redundant debris, the redundant debris would not stack to generate a great drilling resistance. Therefore, the object of speedy fastening is achieved.

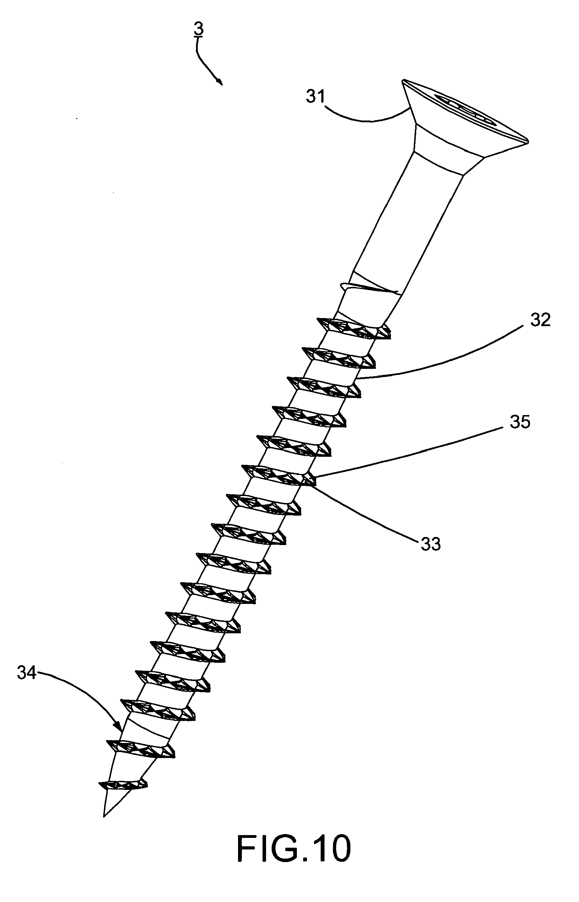

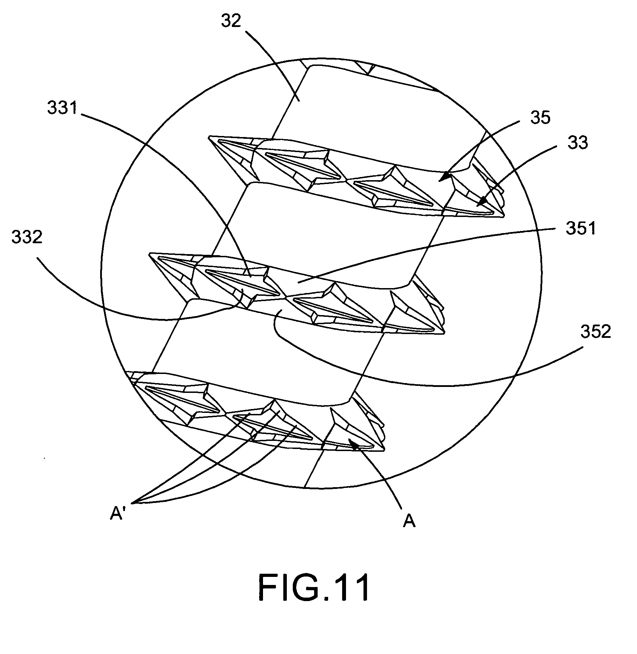

Further referring to Figs. **10** and **11**, a third preferred embodiment is shown. The screw **3** of the present invention comprising the similar elements and correlations as those in the first preferred embodiment is herein omitted. A head portion **31**, a shank portion **32**, a plurality of first threads **33**, a drilling portion **34**, and a plurality of second threads **35** could be likely found in this embodiment. These constituents in this embodiment similarly promote the strength of the screw, enhance the cutting effect of the screw, and encourage the fastening speed of the screw as those in the first embodiment. Differently, the opening slots **A** defined on the second threads **35** are correspondingly formed by multiple convergent linear flanks **A'.** In operation, the cooperation of the first threads **33** and the second threads **33** offers a preferable drilling strength, and the opening slots **A** maintain a room in a certain size for the debris accommodation so as to decrease the drilling resistance and promote the cutting effect. Therefore, a prompt drilling performance could be arrived.

To sum up, the present invention in particularly utilizes a plurality of opening slots correspondingly defined on the second threads not only to reserve a debris accommodating room but to assist in severing object fibers. In addition to the bearing force of the second threads is reinforced by the first included angle being smaller than the second included angle, the cutting performance of the screw in accordance with the present invention is preferably promoted, and a speedy fastening effect is accomplished.

While we have shown and described the embodiment in accordance with the present invention, it should be clear to those skilled in the art that further embodiments may be made without departing from the scope of the present invention.

## Claims

1. A screw (3) with low drilling resistance substantially comprising a head (31), a shank (32) extended from said head (31), a plurality of first threads (33) spiraling on said shank (32), and a drilling portion (34) disposed on said shank (32), opposite to said head (31); wherein, each first thread (33) including a first upper flank (331), and a first lower flank (332) connected to said first upper flank (331); a first included angle (α) being formed at a convergence of said first upper flank (331) and said first lower flank (332); **characterized in that**,
a plurality of second threads (35) being spiraled on said shank (32) and being respectively disposed on said first upper flank (331) and said first lower flank (332) ; each second thread (35) including a second upper flank (351) and a second lower flank (352) connected to the second upper flank (351) ; a second included angle (α') being formed at a convergence of said second upper flank (351) and said second lower flank (352); a plurality of connective opening slots (A), formed by at least two convergent linear flanks (A'), being correspondingly defined on said second upper flank (351) and said second lower flank (352); said first included angle (α) being smaller than said second included angle (α').

2. The screw (3) as claimed in claim 1, wherein, a diameter (d) of said first threads (33) is smaller than a diameter (D) of said second threads (35).

3. The screw (3) as claimed in claim 1, wherein, a diameter (d) of said first threads (33) is equal to a diameter (D) of said second threads (35).

## Patentansprüche

1. Schraube (3) mit geringem Bohrwiderstand, im Wesentlichen umfassend einen Kopf (31), einen Schaft (32), der von dem Kopf (31) aus verläuft, eine Vielzahl erster Gewindegänge (33), die spiralförmig an dem Schaft (32) verlaufen, und einen Bohrabschnitt (34), der an dem Schaft (32) gegenüber von dem Kopf (31) angeordnet ist, wobei jeder erste Gewindegang (33) eine erste obere Flanke (331) und eine erste untere Flanke (332), die mit der ersten oberen Flanke (331) verbunden ist, aufweist, wobei ein erster eingeschlossener Winkel (α) beim Zusammentreffen der ersten oberen Flanke (331) und der ersten unteren Flanke (332) gebildet ist, **dadurch gekennzeichnet, dass** eine Vielzahl zweiter Gewindegänge (35) spiralförmig an dem Schaft (32) verläuft und jeweils an der ersten oberen Flanke (331) und der ersten unteren Flanke (332) angeordnet ist; wobei jeder zweite Gewindegang (35) eine zweite obere Flanke (351) und eine zweite untere Flanke (352), die mit der zweiten oberen Flanke (351) verbunden ist, aufweist; wobei ein zweiter eingeschlossener Winkel (α') beim Zusammentreffen der zweiten oberen Flanke (351) und der zweiten unteren Flanke (352) gebildet ist; wobei eine Vielzahl von verbindenden Öffnungsschlitzen (A), die von mindestens zwei zusammenlaufenden linearen Flanken (A') gebildet ist, entsprechend an der zweiten oberen Flanke (351) und der zweiten unteren Flanke (352) definiert ist; wobei der erste eingeschlossene Winkel (α) kleiner ist als der zweite eingeschlossene Winkel (α').

2. Schraube (3) nach Anspruch 1, wobei ein Durchmesser (d) der ersten Gewindegänge (33) kleiner ist als ein Durchmesser (D) der zweiten Gewindegänge (35).

3. Schraube (3) nach Anspruch 1, wobei ein Durchmesser (d) der ersten Gewindegänge (33) gleich einem Durchmesser (D) der zweiten Gewindegänge (35) ist.

## Revendications

1. Vis (3) ayant une faible résistance au perçage, comprenant sensiblement une tête (31), une tige (32) s'étendant à partir de ladite tête (31), une pluralité de premiers filets (33) s'étendant en spirale sur ladite tige (32), et une partie de perçage (34) disposée sur ladite tige (32), à l'opposé de ladite tête (31) ; chaque premier filet (33) comprenant un premier flanc supérieur (331) et un premier flanc inférieur (332) relié audit premier flanc supérieur (331) ; un premier angle inclus (α) étant formé à une convergence dudit premier flanc supérieur (331) et dudit premier flanc inférieur (332) ; **caractérisée par le fait que**,
une pluralité de seconds filets (35) s'étendent en spirale sur ladite tige (32) et sont respectivement disposés sur ledit premier flanc supérieur (331) et ledit premier flanc inférieur (332) ; chaque second filet (35) comprend un second flanc supérieur (351) et un second flanc inférieur (352) relié au second flanc supérieur (351) ; un second angle inclus (α') est formé à une convergence dudit second flanc supérieur (351) et dudit second flanc inférieur (352) ; une pluralité de fentes d'ouverture reliée (A), formées par au moins deux flancs linéaires convergents (A'), sont définies de manière correspondante sur ledit second flanc supérieur (351) et ledit second flanc inférieur (352) ; ledit premier angle inclus (α) étant plus petit que ledit second angle inclus (α').

2. Vis (3) selon la revendication 1, dans laquelle un diamètre (d) desdits premiers filets (33) est plus petit qu'un diamètre (D) desdits seconds filets (35).

3. Vis (3) selon la revendication 1, dans laquelle un diamètre (d) desdits premiers filets (33) est égal à un diamètre (D) desdits seconds filets (35).
